Europäisches Patentamt

European Patent Office

Office européen des brevets

(19)

(11) Publication number: **0 156 190**
**A1**

# (12) EUROPEAN PATENT APPLICATION

(21) Application number: **85102378.8**

(22) Date of filing: **02.03.85**

(51) Int. Cl.⁴: **F 02 M 31/16**

(30) Priority: **06.03.84 IT 1810684**

(43) Date of publication of application:
**02.10.85 Bulletin 85/40**

(84) Designated Contracting States:
**CH DE FR GB LI NL SE**

(71) Applicant: **Bacchi, Umberto**
**Via Garibaldi, 67**
**I-46010 San Martino Dell'Argine (Mantova)(IT)**

(72) Inventor: **Bacchi, Umberto**
**Via Garibaldi, 67**
**I-46010 San Martino Dell'Argine (Mantova)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Anti-clogging device for the submerged sucking pipe in the fuel tank of diesel engines.

(57) The involved technical field is that of internal combustion engines, and the invention relates to an anti-clogging device for the submerged sucking pipe in the fuel tank of diesel engines, which affords simplicity of construction and operation with virtually no running costs. The solution is provided by a device comprising a means (6) of heating the fuel within the return line (4) from the fuel injectors to the tank (1), which fuel is delivered into the tank (1) substantially at a filter (2) located at the end of the submerged sucking pipe (3).

EP 0 156 190 A1

"ANTI-CLOGGING DEVICE FOR THE SUBMERGED SUCKING PIPE IN
THE FUEL TANK OF DIESEL ENGINES"

It is known that during the winter season a serious inconvenience affects diesel engines consisting of the formation within the fuel tank of clots of heavy components, in particular paraffin wax, and in the not unlikely instance of water being present, of ice as well, which tend to clog up the strainer at the bottom of the submerged sucking pipe which takes the fuel from the tank by means of the fuel pump to the injection pump and then to the fuel injectors; consequential to the clogging up of the strainer is that, as may be easily understood, the engine stops owing to lack of fuel.
The problem, which is specially felt with trucks which are often parked outdoors overnight and the fuel tank whereof is exposed and much affected by weather, is all the more serious when it is considered that the engine stops after the vehicle has travelled some distance, thereby the user is placed in a particularly difficult situation, because it is the suction of fuel taking place in the submerged sucking pipe that makes the clots formed and scattered within the mass of fuel converge into the strainer and clog it up.
In order to remedy this drawback additives have been proposed for pouring into the fuel, which, however, are little used owing mainly to their excessively high cost.
It is the aim of this invention to provide an anti-clogging device for the submerged sucking pipe which is of the utmost simplicity, so as to ensure a limited cost and highly reliable operation, and has virtually no running costs.

Within the proposed aim it is an object of the invention to provide an anti-clogging device for the submerged sucking pipe, which can be easily installed in any motor vehicle.

A not least object of the invention is to provide an anti-clogging device which prevents any contamination of the fuel.

The proposed aim and outlined objects are achieved by an anti-clogging device for the submerged sucking pipe of diesel engine fuel tanks, according to the invention, to which tank there is led a return line tube from the injectors adapted to convey excess fuel supplied to the same, characterized by the presence of means of heating said excess fuel within the return line tube, which is made to reach the interior of the tank substantially at a filter located at the end of the submerged sucking pipe.

Advantageously the means of heating the fuel contained in the return line tube to the tank comprises a heat exchanger wherein the heating fluid is water from the cooling system of the engine.

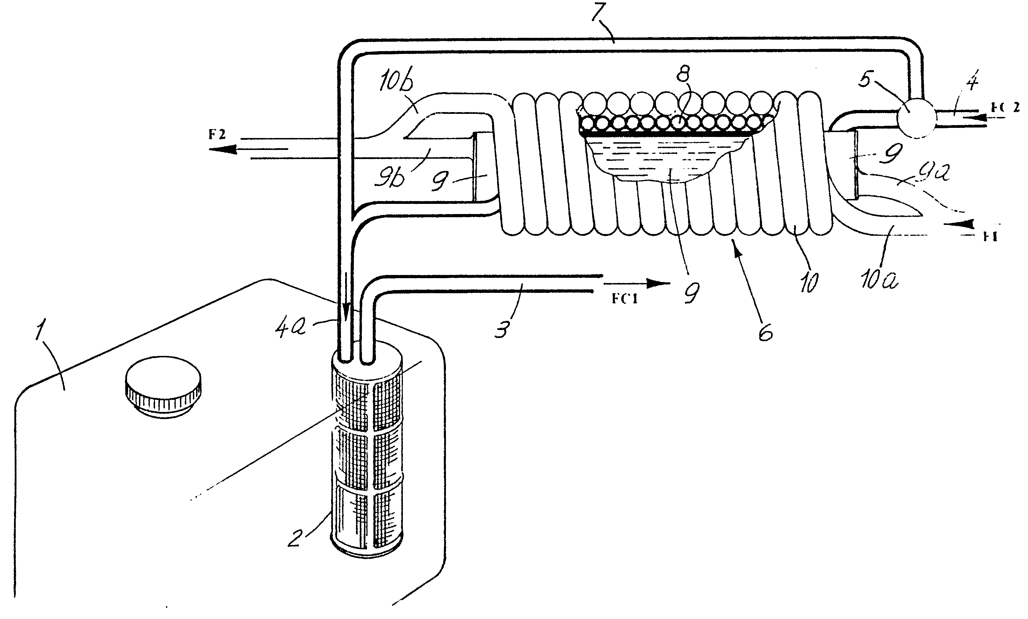

Further features and advantages will be apparent from the description of a preferred, but not exclusive, embodiment of the invention, shown by way of example and not of limitation in the accompanying drawings the one figure whereof is a schematic view of the invention. With reference to the aforesaid figure indicated at 1 is the fuel tank, and indicated at 2 is the filter located at the end of the submerged sucking pipe 3, wherethrough the fuel, in flowing in the direction of the arrow FC1, reaches a series of members, not shown in the figure, comprising in succession a fuel pump, a filter, and an injection pump which supplies it to the injectors whence there extends a return line tube to the tank 1 of the excess fuel which is indicated at 4 and which also collects excess fuel supplied by the injection pump, whilst the arrow FC2 shows the flow direction of the fuel in said tube 4.

On said return line tube 4 there is provided the three-way cock 5 which admits selectively the fuel into the heat exchanger generally indicated at 6 which will be described in detail herein below, and this occurs during the winter season, and into the bypass 7 during the summer season; said exchanger and bypass converge then into the final portion 4a which conveys the fuel in the direction of the arrow contained therein into the tank 1 at the filter 2 at the end of the submerged sucking pipe.

In the heat exchanger 6 the fuel is conveyed into the coil pipe 8, which forms in practice the extension of the tube 4 after the cock 5, which is wound on the periphery of the conduit 9 which receives the heating fluid formed of the water from the cooling circuit of the motor through the branching 9a to discharge it through 9b, and is wrapped by the coil pipe 10 which also conveys hot water oncoming through the branching 10a and discharged through 10b; the arrows F1 and F2 point out the flow direction of the water.

As is readily gathered from the complete description, the invention shows great constructional simplicity

0156190

and may be easily installed on any motor vehicle: further, the heating of the fuel accomplished at the expense of the heat, which would be otherwise wasted, from the engine cooling system affords operation without any energy consumption.

It is then important to consider the fact that, by realizing the heat exchanger such that the two fluids are separated by two walls, breaking of one wall would merely result in the loss of the fluid contained therein, and this loss is at once detected by the user who can remedy it, while no mutual contamination of the two fluids occurs.

Actual tests have, moreover, allowed to ascertain that the installation of the device according to the invention has beneficial effects on the engine performance.

The invention herein is susceptible to many modifications and variations, all of which fall within the scope of the inventive concept: thus, heating of the fuel contained in the return line tube may be achieved with different means from those described, such as, for example an electric resistor powered from the motor vehicle battery and contained in a fluid vessel at the periphery of the return line tube, and the entrance of said tube into the tank may also take place with a different procedure from that shown, providing that it is always close to the filter 2.

In practicing the invention all of the details may be replaced with other technically equivalent elements; furthermore, materials used, as well as the shapes and dimensions, may be any ones.

## CLAIMS

1. An anti-clogging device for the submerged sucking pipe in the fuel tank of diesel engines, to which tank (1) there is led a return line tube (4) from the injectors adapted to convey the excess fuel supplied thereto, characterized by the provision of a means (6) of heating said excess fuel within the return line tube (4), which is made to reach the interior of the tank (1) substantially at a filter (2) located at the end of the submerged sucking pipe (3).

2. A device according to Claim 1, characterized in that the means (6) of heating the fuel contained within the return line tube (4) to the tank (1) comprises a heat exchanger (6) wherein the heating fluid is formed of water from the engine cooling system.

3. A device according to one or more of the preceding claims, characterized in that the heat exchanger (6) between the water from the engine cooling system and the fuel contained within the return line tube (4) comprises a coil pipe (8) for fuel conveyance wound on the periphery of a water conveying conduit (9), and in turn surrounded by a water conveying coil pipe (10).

4. A device according to one or more of the preceding claims, characterized in that the means (6) of heating the fuel contained in the return line tube (4) to the tank (1) comprises an electric resistor powered from a battery contained in a fluid vessel arranged at the periphery of said return line tube (4).

5. A device according to one or more of the preceding claims, characterized by the provision on the

0156190

- 6 -

return line tube (4) of a bypass (7) adapted to block
the passage of fuel from the heat   exchanger (6),
the admission of the fuel to the bypass (7) and exchanger (6) being selectively controlled by a three-
way cock (5).

6. An anti-clogging device for the submerged
sucking pipe in the fuel tank of diesel engines,
characterized in that it comprises one or more of
the features described and/or illustrated.

1/1

European Patent Office

**EUROPEAN SEARCH REPORT**

Application number

EP 85 10 2378

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-2 018 890 (FIAT)<br><br>* Abstract; page 1, lines 1-15, lines 117-130; page 2, lines 1-6,36-91 * | 1,2,5,6 | F 02 M 31/16 |
| Y | FR-A-2 521 219 (KELLER)<br><br>* Page 1, lines 1-5; page 2, lines 1-10; page 3, lines 7-14,29-36; figures 2,3 * | 1,2,4,6 | |
| Y | REVUE TECHNIQUE DIESEL, no. 123, October 1983, pages 97-102, Boulogne, Billancourt, FR; "Comment lutter contre la paraffine dans le gazole"<br>* Page 102, last paragraph; figure * | 1,2,4,6 | |
| A | US-A-4 326 492 (LEIBRAND)<br>* Column 4, lines 5-20,29-37; column 5, lines 17-58; column 6, lines 60-68; column 7, lines 1-7; figure 1 * | 1,2,3 | TECHNICAL FIELDS SEARCHED (Int. Cl.4)<br><br>F 02 M |
| A | DE-A-2 606 113 (INGENIEURBÜRO MACK & MACK)<br>* Page 6, paragraphs 2,3; page 7, paragraphs 1,2 * | 1 | |

The present search report has been drawn up for all claims

| Place of search | Date of completion of the search | Examiner |
|---|---|---|
| THE HAGUE | 06-06-1985 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document